# EUROPEAN PATENT APPLICATION

(11) **EP 1 568 923 A1**
(43) Date of publication of application: **31.08.2005**
(21) Application number: 05101345.6
(22) Date of filing: 22.02.2005
(51) Int. Cl.: F16K 17/06

(54) **Pressure relief valve**

(30) Priority: 27.02.2004 IT MO20040045
(71) Applicant: SALAMI S.p.A., I-41100 Modena (IT)
(72) Inventor: Garcea, Rocco, 40134, Bologna (IT)
(74) Representative: Modiano, Guido

(57) **Abstract**

A pressure relief valve assembly, comprising: a valve body (2) that can be associated hermetically in a corresponding receptacle (A), which is associated with a working circuit (C) of a fluid at a working pressure and with a discharge duct (S) for said fluid at a discharge pressure, at least one seat (5) for the abutment of a corresponding flow control element (6), which is accommodated so that it can slide within the valve body (2); elastic compression means (7), which are accommodated within the valve body (2); a piston (8), which is associated with the elastic means (7) on the opposite side of the flow control element (6) and is slidingly accommodated within the valve body (2); and means (9) for adjusting the position of the piston (8) along the valve body (2). The valve body comprises at least one first perforated portion (2a) and one second perforated portion (2b), which are mutually associated so that their respective holes are connected; the second portion (2b) is associated with the adjustment means (9) and has a hole that has a substantially smaller transverse cross-section than the piston (8) at least in a portion that is interposed between the piston and an end of the valve body (2), sealing means (10) being associated with the valve body so as to prevent the outflow of fluid through the end of the valve body.

## Description

The present invention relates to a pressure relief valve assembly.

It is known that pressure relief valves are used in circuits in which there is a pressurized fluid and are sized so as to allow to discharge the fluid when the working pressure inside the circuit exceeds a safety threshold value for which such valves are calibrated.

In particular, so-called cartridge valves are known which are provided as a preassembled subassembly, which during installation must be fitted in an appropriately provided seat connected to the circuit to be protected and to a discharge duct.

Generally, these valves comprise an internally hollow and substantially elongated valve body, which can be accommodated in the seat by arranging it so that a first end is inserted inside the seat and a second end, arranged opposite the first end, protrudes externally or in any case can be accessed from the outside.

The valve body is provided with a longitudinal through hole, which forms the intake port for the fluid at the working pressure at said first end.

Proximate to the intake port, the valve body is provided with a lateral opening that provides the discharge port for said fluid.

Inside the longitudinal hole of the valve body, between the intake and discharge ports, there is a seat on which a flow control element is engaged which, in normal conditions, keeps the intake port closed and interrupts the connection to the discharge port, and there is a helical compression spring, which keeps the flow control element in the closed configuration.

Further, there is a so-called spring guiding piston, which is associated with the spring on the opposite side of the flow control element and is accommodated so that it can slide along the longitudinal hole of the valve body; the axial position of the piston along the hole can be adjusted by way of screw means, which are formed monolithically with respect to the piston or are associated with the valve body at the second end and can be accessed by an assigned operator, the longitudinal hole being threaded internally at the second end for coupling to said screw means.

By modifying the axial position of the piston it is possible to vary the preloading of the spring, so as to adjust the threshold pressure for which the flow control element clears the intake port. As long as the thrust applied by the working pressure of the circuit to the exposed area of the flow control element is lower than the preloading of the spring, said spring in fact keeps the flow control element in the closed configuration; moreover, when the working pressure reaches and exceeds the threshold value, the action that it applies to the exposed area of the flow control element is such as to overcome the resistance of said spring, open the flow control element and discharge the valve.

It is possible to provide, along the longitudinal hole of the valve body, an internally protruding shoulder for stopping the spring guiding piston, which is arranged so as to prevent, during adjustment, the spring from being compressed until it is packed, and thus preserve the functionality of the valve.

This simpler version of pressure relief valve, of the so-called direct-action type, is complemented by more complex embodiments, such as pilot-operated valves, which are provided with two flow control elements: a main flow control element at the intake port, which opens by way of the action of a difference in pressure between the inside and the outside of the valve body, and a pilot flow control element, which is arranged inside the valve body and whose opening is normally contrasted by an elastic compression spring, the preloading of which can be adjusted by the user by way of screw means.

Moreover, pressure relief valves can be sized so as to perform, in addition to the conventional safety function, an emptying-check function.

In this case, the areas exposed to the working and discharge pressures are sized so as to open the flow control elements if the latter is higher than the former, so as to allow the reverse flow of the fluid inside the circuit and prevent its emptying.

However, these known valves are not free from drawbacks, including the fact that during the adjustment of the preloading of the spring, the corresponding screw means may accidentally become uncoupled, with consequent expulsion of the mechanical elements accommodated inside the valve body due to the pressure of the oil inside the valve body, and with the emission of jets of pressurized oil generally at high temperature.

Therefore, the use of these valves does not ensure that operators assigned to their adjustment and maintenance work in adequate safety conditions and can cause damage to nearby equipment and objects.

Further, the adjustment of the tripping pressure of the valve cannot be performed while "hot", i.e., while fluid at high pressure and temperature is present in the circuit in which the valve is inserted, since leaks of fluid may occur which, in addition to being potentially harmful for the assigned operators, may damage the adjacent equipment and dirty and possibly contaminate the surrounding environment.

The aim of the present invention is to eliminate the above-mentioned drawbacks of known valves, by providing a pressure relief valve assembly that allows to adjust the threshold pressure for which said assembly discharges the circuit to which it is applied both at the bench and while the circuit is operating, in optimum safety conditions for the assigned operators and without the risk of damaging the environment in which it is fitted.

Within this aim, an object of the present invention is to avoid leaks of fluid in any operating condition.

Another object of the present invention is to maintain the correct functionality of the valve assembly during adjustment of the threshold pressure, avoiding the packing of the spring and the consequent jamming of the flow control element.

Another object of the present invention is to provide a pressure relief valve that is simple, relatively easy to provide in practice, safe in use, effective in operation, and has a relatively low cost.

This aim and these and other objects that will become better apparent hereinafter are achieved by the present pressure relief valve assembly, which comprises a valve body that has a substantially elongated shape, is internally hollow and open at its ends, and can be associated hermetically in a corresponding receptacle, which is associated with a working circuit of a fluid at a working pressure and with a discharge duct for said fluid at a discharge pressure, with a first end inserted therein and with a second end, arranged opposite the first end, that can be accessed from the outside; a fluid intake port, which is associated with said first end and is suitable to be connected to the working circuit; at least one fluid discharge port, which is associated with said valve body and is suitable to be connected to the discharge duct; at least one seat for the abutment of a corresponding flow control element, which is accommodated so that it can slide within said valve body and is suitable to be exposed, by means of said intake port, to the fluid at the working pressure; elastic compression means, which are accommodated within said valve body in order to keep said flow control element in abutment against said seat; a piston, which is associated with said elastic means on the opposite side of said flow control element and is slidingly accommodated within said valve body; means for adjusting the position of said piston along said valve body, which are associated therewith at said second end and can be accessed by a user; characterized in that said valve body comprises at least one first perforated portion and one second perforated portion, which are mutually associated so that their respective holes are connected, the second portion being arranged at said second end, being associated with said adjustment means and being provided with a hole that has a substantially smaller transverse cross-section than said piston at least in a portion that is interposed between said piston and said second end, sealing means being associated with the valve body so as to prevent the outflow of fluid through the second end.

Further characteristics and advantages of the present invention will become better apparent from the following detailed description of some preferred but not exclusive embodiments of a pressure relief valve assembly, illustrated by way of non-limiting example in the accompanying drawings, wherein:
Figure 1 is a transverse sectional view of a first embodiment of the valve assembly according to the invention;
Figure 2 is a transverse sectional view of a second embodiment of the valve assembly according to the invention;
Figure 3 is a transverse sectional view of a third embodiment of the valve assembly according to the invention.

With reference to the figures, the reference numeral 1 generally designates a pressure relief valve assembly.

The valve assembly 1 is preferably of the type that is conventionally known as cartridge valve.

The valve assembly 1 comprises a valve body 2, which has an elongated shape, is internally hollow and open at its ends, and is accommodated, during use, in a corresponding receptacle A, which is shown schematically in the figures and is associated with a working circuit C of a fluid, such as hydraulic oil, at a working pressure and with a discharge duct S for said fluid at a discharge pressure, which is normally lower than the working pressure, with one first end inserted within said receptacle and a second end that protrudes from said receptacle or in any case can be accessed from the outside.

Normally, the valve body 2 is screwed into the receptacle A by interposing rubber sealing rings T, which avoid seepage of oil between the valve assembly 1 and said receptacle.

However, alternative methods for fitting the valve assembly 1 in the receptacle A are also possible, such as for example fixing by means of threaded elements that are engaged in a flange that is rigidly coupled to the valve body 2.

Further, the valve assembly 1 comprises an oil intake port 3, which is associated with the valve body 2 at its first end and is suitable to be connected to the circuit C, and at least one oil discharge port 4, which is associated with the valve body 2 and is suitable to be connected to the discharge duct S.

Moreover, there is a seat 5 for the abutment of a corresponding flow control element 6, which is slidingly accommodated within the valve body 2 and is suitable to be exposed by means of the intake port 3 to the oil at the working pressure.

Moreover, elastic compression means are accommodated within the valve body 2 and are constituted by a helical spring 7 for keeping the flow control element 6 in abutment against the seat 5; one end of the spring is associated with the flow control element and the opposite end is associated with a piston 8, which is slidingly accommodated within the valve body 2. Moreover, means 9 for adjusting the position of the piston 8 along the valve body 2 are provided and are associated therewith at its second end.

According to the invention, the valve body 2 comprises at least one first portion 2a and one second portion 2b, which are perforated and mutually associated so that their respective holes are connected.

The second portion 2b is arranged at the second end of the valve body 2 and is associated with the adjustment means 9, and its corresponding hole has a transverse cross-section that is substantially smaller than the cross-section of the piston 8, at least in a portion that is interposed between the piston and the second end of the valve body 2.

Moreover, sealing means 10 are provided which are associated with the valve body 2 so as to prevent the escape of pressurized oil from the second end; the sealing means 10 can be interposed between the piston 8 and the valve body 2 or between the second portion 2b and the adjustment means 9.

In this manner, the reduction in the cross-section of the longitudinal hole of the valve body at the second portion 2b prevents the expulsion of mechanical parts through the second end of the valve body 2, while the sealing means 10 avoid seepage of oil, which might possibly press against the adjustment means 9, causing a sudden separation from the valve body 2.

It is further possible to provide additional sealing means 11, which are interposed between the portions 2a and 2b.

The sealing means 10 and the optional additional sealing means 11 comprise respective sealing rings or the like.

Advantageously, the valve assembly 1 is provided with means 12 for limiting the sliding of the piston 8 along the valve body 2 toward the seat 5.

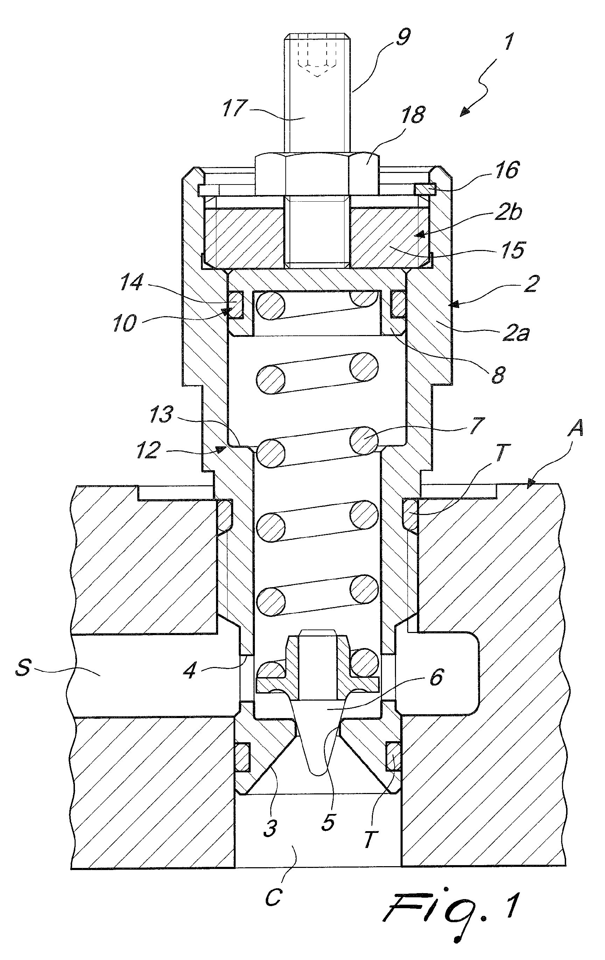

In a first embodiment, shown in Figure 1, the valve assembly 1 is of the direct-action type.

The seat 5 is formed in the first portion 2a and substantially coincides with the intake port 3; the discharge port 4 is formed by a transverse opening, which is formed in the first portion 2a on the opposite side with respect to the intake port 3 relative to the seat 5.

The limiting means 12 are constituted by a shoulder 13 for the abutment of the piston 8, which protrudes internally from the first portion 2a and is arranged at a distance from the seat 5 that is sized so as to avoid the packing of the spring 7.

The sealing means 10 are constituted by a conventional sealing ring 14 made of rubber, which is interposed between the piston 8 and the first portion 2a.

The piston 8 is in fact constituted by a cylinder that is provided with a recess, which is formed in the face that is associated with the spring 7 and in which at least the first turn of said spring is inserted, and with a perimetric groove, which is formed on the lateral surface in order to accommodate the sealing ring 14.

The second portion 2b is constituted by an externally threaded bush 15, which is screwed into the hole of the first portion 2a, which is threaded at least at said bush.

The central hole of the bush 15 has a constant cross-section, which is smaller than the cross-section of the piston 8.

The bush 15 is completely inserted in the hole of the first portion 2a, which is provided with a shoulder for the abutment of said bush; on the opposite side with respect to said shoulder there is an elastic safety ring 16, which is interposed between the bush 15 and the first portion 2a in order to retain the bush 15 in a longitudinal direction.

The adjustment means 9 comprise a threaded stem 17, the shank of which is inserted in the central hole of the bush 15 and is associated with the piston 8, the bush 15 being internally threaded.

The bush 15 and the stem 17 are therefore associated by means of a threaded coupling.

By screwing the stem 17 more or less into the bush 15, it is possible to adjust the position of the piston 8 along the first portion 2a and therefore the preloading of the spring 7.

There is also a locking nut 18, which is screwed on the stem 17 in abutment against the bush 15.

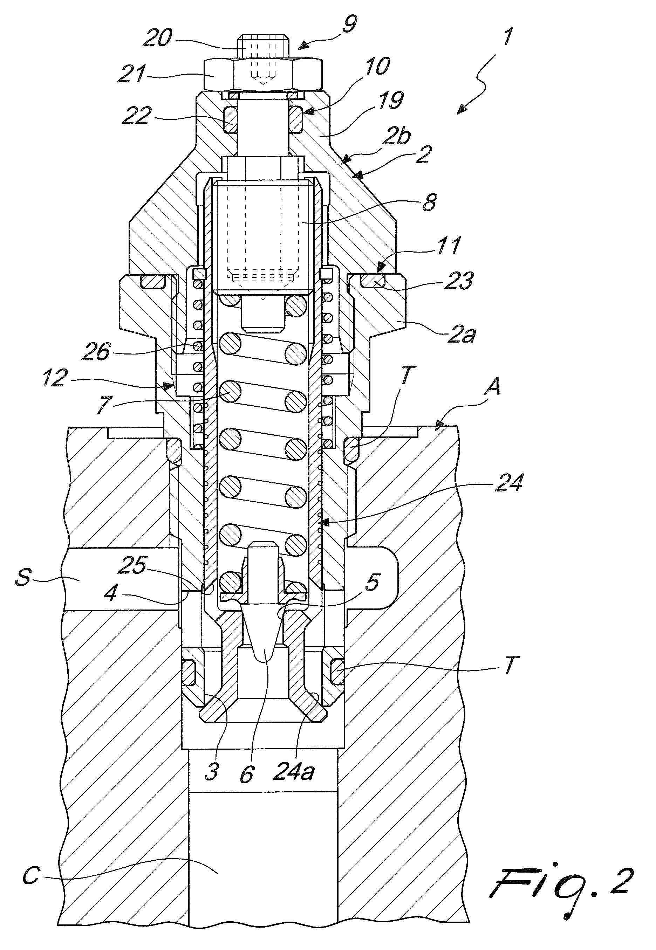

Figure 2 illustrates a second embodiment of the invention, in which the valve assembly 1 is of the direct-action type with the function of preventing the emptying of the circuit C.

In this case, the second portion is constituted by a contoured bush 19, which has an externally threaded end portion for coupling to the first portion 2a and in which the central hole has a transverse cross-section that is smaller than the cross-section of the piston only in a portion that is interposed between said piston and the second end of the valve body 2.

The adjustment means 9 comprise a stem 20, which is prism-shaped at least proximate to the end that protrudes into the valve body 2, and is inserted within a corresponding opening provided in the piston 8, the piston and the stem 20 being associated by means of a side-fitting coupling.

The bush 19 is contoured internally so as to form an abutment shoulder for the prism-shaped portion of the stem 20.

The piston 8 is constituted by a cylinder that is provided with a tab that protrudes from its face that is associated with the spring 7 and fits between the turns of said spring.

A nut 21 for locking in abutment on the bush 19 is screwed onto the end of the stem 20 that protrudes from said bush.

The sealing means 10 are constituted by a sealing ring 22, which is interposed between the bush 19 and the stem 20, the hole of said bush being provided with a circumferential groove for accommodating the sealing ring 21 proximate to the second end.

Further, the additional sealing means 11 are provided and are constituted by an additional sealing ring 23, which is interposed between the portions 2a and 2b and is accommodated in a slot that is formed on the face of the first portion 2a that faces the second portion 2b.

The intake port 3 is formed at the end of the first portion 2a that protrudes into the receptacle A, while the discharge port 4 is formed by a transverse opening that is formed along the first portion.

Further, the valve assembly 1 has a tubular element 24, which is accommodated slidingly within the portions 2a and 2b and is provided with a first flared end, which protrudes from the first portion 2a and engages the intake port 3, and with a second end, which is arranged opposite the first one and is associated with the piston 8.

The tubular element 24 is contoured so as to form the seat 5 in an intermediate position between said ends and is provided with a transverse through opening 25, which is interposed between the seat 5 and the second end of the element and is connected to the discharge port 4.

Further, the valve assembly 1 is provided with second elastic compression means, which are constituted by a second helical spring 26, which is interposed between the first portion 2a and the tubular element 24, in order to keep the element in abutment against the intake port 3.

The tubular element 24 has, at its first end, a surface 24a that is exposed to the discharge pressure and is sized so that when the working pressure inside the circuit decreases, the action applied by the discharge pressure to said surface overcomes the resistance of the second spring 26 and causes the sliding of said element, together with the piston 8, the spring 7 and the flow control element 6, away from the intake port 3, connecting said intake port to the discharge port 4 so as to allow the reverse flow of the oil from the discharge duct S to the circuit C.

The piston 8 is threaded externally for coupling to the tubular element 24, which is associated with an internal thread at its second end.

The limiting means 12 are constituted by the end of said internal thread.

Moreover, abutment elements, not shown in the figures, are provided in order to prevent the relative rotation of the tubular element 24 with respect to the valve body 2.

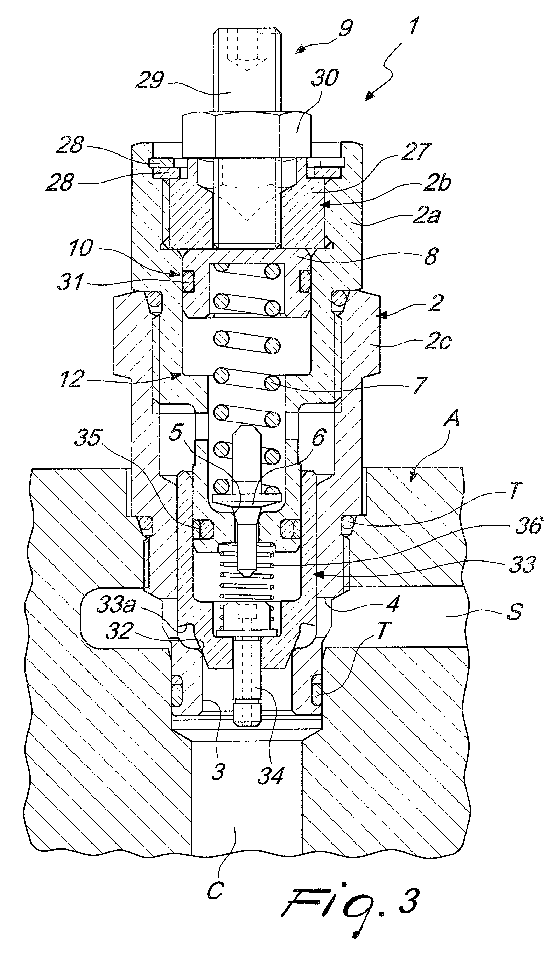

In a third embodiment, shown in Figure 3, the valve assembly 1 is of the pilot-operated type, preferably with an emptying-check function.

The seat 5 is formed by the first portion 2a, which is constituted by three consecutive tubular sections that have diameters that decrease toward the seats.

The limiting means 12 are constituted by the shoulder that protrudes inside the first portion 2a and is formed at the connection between two consecutive sections.

The second portion 2b consists of an externally threaded bush 27, which is screwed into the hole of the first portion 2a, which is threaded at least at said bush.

The central hole of the bush 27 has a constant cross-section that is smaller than the cross-section of the piston 8.

The bush 27 is fully inserted in the hole of the first portion 2a, which has a shoulder for the abutment of the bush; on the opposite side of the shoulder there are two elastic safety rings 28, which are interposed between the bush 27 and the first portion 2a in order to couple said bush in a longitudinal direction.

The adjustment means 9 comprise a threaded stem 29, in which the shank is inserted in the central hole of the bush 27 and is associated with the piston 8, the bush 27 being threaded internally.

Accordingly, the bush 27 and the stem 29 are associated by means of a threaded coupling.

Further, a locking nut 30 is screwed onto the stem 29 in abutment against the bush 27.

The piston 8 and the spring 7 are accommodated between the portions 2a and 2b.

The sealing means 10 are constituted by a sealing ring 31, which is interposed between the piston 8 and the internal wall of the intermediate section of the first portion 2a.

The piston 8 has a recess, in which the first turns of the spring 7 are inserted, on the face that is directed toward said spring, and has a lateral groove for accommodating the sealing ring 31.

The valve body 2 further comprises a third portion 2c, which is arranged at its first end and is contoured so as to form the intake port 3 and a second seat 32 at said intake port.

Further, the valve assembly 1 comprises a second flow control element 33, which is accommodated between the portions 2a and 2c and can engage by abutment the second seat 32.

The second flow control element 33 is shaped like a sort of cup, in which the bottom is directed toward the intake port 3 and is open in order to connect the flow control element 6, which acts as a pilot, to the oil at the working pressure, so as to determine the pilot driving pressure of the valve assembly 1 in the chamber delimited by the second flow control element 33 and the first portion 2a.

In the opening provided on the bottom of the second flow control element there is in fact a perforated pin 34, in which one end is arranged at the intake port 3 and the other end faces the flow control element 6.

The second flow control element 33 is associated hermetically with the first portion 2a by interposing sealing elements 35 such as rings or the like.

The discharge port 4 is formed by a transverse opening provided in the third portion 2c on the opposite side with respect to the intake port 3 relative to the second seat 32.

Further, third elastic compression means are provided which are constituted by a third helical spring 36, which is interposed between the first portion 2a and the second flow control element 33 in order to keep said flow control element in abutment against the second seat 32.

Preferably, the second flow control element 33 is provided with an annular surface 33a that is exposed to the discharge pressure in order to allow the emptying-check function according to a known operating method.

The operation of the valve assemblies 1 according to the invention is similar to the operation of conventional pressure relief valves of the direct-action or pilot-operated type, optionally with an emptying-check function, and therefore is not described in detail.

In practice it has been found that the described invention achieves the proposed aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02004A000045 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pressure relief valve assembly, comprising a valve body that has a substantially elongated shape, is internally hollow and open at its ends, and can be associated hermetically in a corresponding receptacle, which is associated with a working circuit of a fluid at a working pressure and with a discharge duct for said fluid at a discharge pressure, with a first end inserted therein and with a second end, arranged opposite the first end, that can be accessed from the outside; a fluid intake port, which is associated with said first end and is suitable to be connected to the working circuit; at least one fluid discharge port, which is associated with said valve body and is suitable to be connected to the discharge duct; at least one seat for the abutment of a corresponding flow control element, which is accommodated so that it can slide within said valve body and is suitable to be exposed, by means of said intake port, to the fluid at the working pressure; elastic compression means, which are accommodated within said valve body in order to keep said flow control element in abutment against said seat; a piston, which is associated with said elastic means on the opposite side of said flow control element and is slidingly accommodated within said valve body; means for adjusting the position of said piston along said valve body, which are associated therewith at said second end and can be accessed by a user; **characterized in that** said valve body comprises at least one first perforated portion and one second perforated portion, which are mutually associated so that their respective holes are connected, the second portion being arranged at said second end, being associated with said adjustment means and being provided with a hole that has a substantially smaller transverse cross-section than said piston at least in a portion that is interposed between said piston and said second end, sealing means being associated with the valve body so as to prevent the outflow of fluid through the second end.

2. The valve assembly according to claim 1, **characterized in that** it comprises additional sealing means interposed between said first and second

3. The valve assembly according to claim 1, **characterized in that** said sealing means are interposed between said valve body and said piston.

4. The valve assembly according to one or more of the preceding claims, **characterized in that** said sealing means are interposed between said second portion and said adjustment means.

5. The valve assembly according to one or more of the preceding claims, **characterized in that** at least one among said sealing means and said additional sealing means comprises at least one corresponding sealing ring or the like.

6. The valve assembly according to one or more of the preceding claims, **characterized in that** it comprises means for limiting the sliding of said piston toward said seat.

7. The valve assembly according to one or more of the preceding claims, **characterized in that** said limiting means comprise a shoulder for the abutment of said piston which protrudes inside said valve body.

8. The valve assembly according to one or more of the preceding claims, **characterized in that** said shoulder is associated with said first portion.

9. The valve assembly according to one or more of the preceding claims, **characterized in that** said seat is associated with said first portion.

10. The valve assembly according to one or more of the preceding claims, **characterized in that** said seat substantially coincides with said intake port.

11. The valve assembly according to one or more of the preceding claims, **characterized in that** said second portion comprises a bush and said adjustment means comprise a stem in which one end is inserted in said bush and is associated with said piston.

12. The valve assembly according to one or more of the preceding claims, **characterized in that** the hole of said second portion has a substantially constant transverse cross-section that is smaller than the cross-section of said piston.

13. The valve assembly according to one or more of the preceding claims, **characterized in that** said bush and said stem are associated by way of a threaded coupling.

14. The valve assembly according to one or more of the preceding claims, **characterized in that** said bush has at least one externally threaded portion that engages within the hole of said first portion, the hole of the first portion being threaded internally at least at the bush.

15. The valve assembly according to one or more of the preceding claims, **characterized in that** said bush is completely inserted within the hole of said first portion, at least one elastic safety ring being interposed in order to retain said bush in a longitudinal direction.

16. The valve assembly according to one or more of the preceding claims, **characterized in that** it comprises a tubular element, which is accommodated slidingly within said valve body, is provided with a first end that can engage said intake port and with a second end that lies opposite the first end and is associated with said piston, is contoured so as to form said seat in an intermediate position between said ends, and is provided with at least one transverse opening, which is interposed between said seat and said second end and is connected to said discharge port, and second elastic compression means for keeping the first end engaged with said intake port, which are interposed between said valve body and said tubular element, the tubular element being partially exposed to the fluid at the discharge pressure by means of the discharge port at its first end.

17. The valve assembly according to one or more of the preceding claims, **characterized in that** said piston and said stem are associated by way of a side-fit coupling.

18. The valve assembly according to one or more of the preceding claims, **characterized in that** said piston is threaded externally and said tubular element is associated at the second end with an internal thread in which said piston can engage.

19. The valve assembly according to one or more of the preceding claims, **characterized in that** said limiting means are defined by the end of said internal thread.

20. The valve assembly according to one or more of the preceding claims, **characterized in that** said seat is associated with said first portion, the piston and the elastic means being interposed between said first and second portions, and **in that** said valve body comprises a third portion, which is arranged at the first end and is contoured so as to form said discharge port and a second seat at said intake port, which is associated hermetically and externally with respect to said first portion, a second flow control element being further provided which can engage by abutment against said second seat and is accommodated slidingly within said third portion and is associated hermetically with said first portion, third elastic compression means being further provided in order to keep said second flow control element in abutment against said second seat, said means being interposed between said element and said first portion.

21. The valve assembly according to one or more of the preceding claims, **characterized in that** said second flow control element is open in order to connect said flow control element to said intake port.

22. The valve assembly according to one or more of the preceding claims, **characterized in that** said second flow control element comprises a surface that is exposed to the fluid at the discharge pressure by means of said discharge port.

23. The valve assembly according to one or more of the preceding claims, **characterized in that** it is of the direct-acting type.

24. The valve assembly according to one or more of the preceding claims, **characterized in that** it is of the pilot-operated type.
